# EUROPÄISCHE PATENTANMELDUNG

(11) **EP 4 738 676 A1**
(43) Veröffentlichungstag der Anmeldung: **06.05.2026**
(21) Anmeldenummer: 25212366.6
(22) Anmeldetag: 30.10.2025
(51) Int. Cl.: H02M 1/32, H02M 7/06, H02M 3/335, H02M 1/44, H02H 9/04

(54) **SCHALTNETZTEIL UND HEIZGERÄT**

(30) Priorität: 04.11.2024 DE 102024132025
(71) Anmelder: Vaillant GmbH, 42859 Remscheid NRW (DE)
(72) Erfinder: Schulte, Stephan, 42929 Wermelskirchen (DE)
(74) Vertreter: Popp, Carsten

(57) **Zusammenfassung**

Vorgeschlagen wird ein Schaltnetzteil (20) mit Schutzleiterbezug (PE), welches einen Transformator (27) hat, aufweisend eine Sekundärseite (25) mit einen Synchrongleichrichter (32) sowie eine Primärseite (24) mit einem Gleichrichter (29), der eine positive Hochspannungsseite (30)und eine negative Hochspannungsseite (31) ausbildet, wobei (i) zwischen der positiven Hochspannungsseite (30) und negativen Hochspannungsseite (31) ein erster Kondensator (26) angeordnet ist, und (ii) an der positiven Hochspannungsseite (30) und/oder negativen Hochspannungsseite (31) eine Überspannungsschutzschaltung (23) angeordnet ist, die ein Widerstandselement (38), ausgebildet als Varistor, umfasst und (iii) die positive Hochspannungsseite (30) oder die negative Hochspannungsseite (31) über eine Kapazität oder einen zweiten Kondensator (40) mit dem Schutzleiter (PE) elektrisch verbunden ist.

## Beschreibung

Die Erfindung betrifft ein Schaltnetzteil und ein Heizgerät.

Schaltnetzteile (SNT oder SMPS - switched mode power supply) sind Bauteile, die eine unstabilisierte Eingangs-Wechselspannung in eine konstante Ausgangs-Gleichspannung umwandeln und kommen bei einer Vielzahl von Haushaltsgeräten zum Einsatz, unter anderem auch in Heizgeräten.

Die Spannungswandlung erfolgt dabei gegenüber herkömmlichen Transformatornetzteilen mit einer höheren Frequenz, wodurch der Transformator mit geringerer Baugröße ausführbar ist. Die Netzspannung wird zunächst gleichgerichtet, geglättet und durch einen elektronischen Schalter in eine höherfrequente Spannung umgewandelt ("zerhackt") und die entstehende und im Vergleich zur Eingangsspannung höherfrequente Wechselspannung transformiert. Anschließend kann die transformierte Wechselspannung erneut gleichgerichtet und gesiebt werden, und die entstehende Gleichspannung als Ausgangsspannung zur Verfügung gestellt werden.

Schaltnetzteile weisen in der Regel Überspannungsableiter auf, die vor eingangsseitigen Überspannungen, beispielhaft ausgelöst durch Schalthandlungen oder Blitzschlag, schützen. Diese umfassen zumeist Varistoren, die parallel zu den aktiven Leitern angeordnet sind und die Überspannung in Wärme umwandeln. Der entstehende Schutz ist bei einfachen Applikationen ohne Schutzleiterbezug zumeist vollkommen ausreichend. Nachteilig kann dies jedoch nur die auftretenden Gegentaktüberspannungen des Versorgungsnetzes reduzieren, nicht jedoch daraus resultierende nachfolgende Störspannungen, die auftreten können, indem Schwingkreise mit Schutzleiterbezug angeregt werden. Diese Schwingkreise können neben parasitären Elementen insbesondere durch Y-Kapazitäten und Eingangsinduktivitäten gebildet werden. Die Induktivitäten können dabei stromkompensierte Drosseln (Gleichtaktdrosseln) oder auch einzelne Induktivitäten sein. Die Schwingkreise müssen dabei nicht Bestandteil des Schaltnetzteils selbst sein, sondern können auch Teile benachbarter Baugruppen sein. Bei einem Heizgerät kann dies beispielsweise ein Gebläse (Fördereinrichtung zur Förderung eines Verbrennungsgemischs zu einem Brenner) oder auch eine Umwälzpumpe, die einen Wärmeträger in einem Heizkreis zirkuliert, sein.

Die Störspannungen können von einem Synchrongleichrichter des Schaltnetzteils als Steuersignal interpretiert werden, das eine Stromabnahme anzeigt. In Folge kann es zu einer falschen aktiven Gleichrichtung auf der Sekundärseite des Schaltnetzteils kommen, während gleichzeitig auf der Primärseite der Schaltregler die Primärseite des Hauptübertragers bestromt. Dies kann zur Zerstörung des Synchrongleichrichters und damit des Schaltnetzteils führen. Nachteilig ist, dass eine Begrenzung der Störungen auf der Kleinspannungsseite mit üblichen Mitteln, wie beispielsweise Zenerdioden, Suppressordioden, Varistoren und/ oder Gasentladungsröhren, nicht oder kaum möglich ist, da die Störspannung sich nur unwesentlich von Arbeitssignalen bzw. Steuersignalen unterscheidet. Zudem können direkte Eingriffe in die Schwingkreise die elektromagnetischen Eigenschaften des Schaltnetzteils oder auch des enthaltenden Geräts und damit die elektromagnetische Verträglichkeit desselben verschlechtern.

Die US2024/0280645A1 offenbart ein Verfahren zum Betreiben einer USB- Stromversorgung, wobei das Betreiben der Stromversorgung blockiert wird, wenn eine Fehlerbedingung eintritt. Hierzu wird ein PWM-Signal eines Synchrongleichrichters, der auf der Sekundärseite des Transformators angeordnet ist, rückgekoppelt. Dies erfordert nachteilig einen aufwendigen Synchrongleichrichter.

Aufgabe der vorliegenden Erfindung ist es, die mit Bezug auf den Stand der Technik geschilderten Probleme zumindest teilweise zu lindern und insbesondere ein Schaltnetzteil und ein Heizgerät vorzuschlagen, die verträglich mit Überspannungen umgehen können.

Die Erfindung soll zudem die Komplexität eines Schaltnetzteils bzw. eines dieses aufweisenden Heizgeräts nicht steigern und einfach umzusetzen sein.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Schaltnetzteil mit Schutzleiterbezug (PE) bei. Dieses umfasst einen Transformator, aufweisend eine Sekundärseite mit einem Synchrongleichrichter und eine Primärseite mit einem Gleichrichter. Der Gleichrichter bildet einen Zwischenkreis mit Spannungsniveau aus mit einer positiven Hochspannungsseite und einer negativen Hochspannungsseite aus. Klarstellend wird hier angemerkt, dass es sich bei der "Hochspannung" des Zwischenkreises um eine Spannung handelt, die um ein Vielfaches höher als die zulässige Berührungsspannung ist. Dabei ist weiter Folgendes vorgesehen: (i) zwischen der positiven Hochspannungsseite und negativen Hochspannungsseite ist ein erster Kondensator angeordnet; (ii) an der positiven Hochspannungsseite und/ oder negativen Hochspannungsseite ist eine Überspannungsschutzschaltung angeordnet, die mindestens ein Widerstandselement, ausgebildet als Varistor umfasst, und (iii) die positive Hochspannungsseite oder die negative Hochspannungsseite über eine Kapazität und/oder einen zweiten Kondensator der Überspannungsschutzschaltung mit dem Schutzleiter (PE) elektrisch verbunden ist.

Das Schaltnetzteil hat einen Schutzleiterbezug, dies bedeutet, dass der Schutzleiter, in der Regel mit der Abkürzung PE bezeichnet, in die Schaltung des Schaltnetzteils einbezogen ist. Insbesondere hat die Sekundärseite des Schaltnetzteils einen Schutzleiterbezug und es handelt sich somit um ein PELV (Protective Extra Low Voltage)-System. Der Schutzleiterbezug kann dabei auch in einer galvanischen Verbindung zwischen Primärseite und Sekundärseite des Schaltnetzteils bestehen.

Das Schaltnetzteil umfasst einen Transformator zur Transformation der Spannung mit einer Primärseite, an der die Versorgungsspannung anliegt. Bei der Versorgungsnennspannung handelt es sich um eine Wechselspannung, häufig in einem Bereich von 207 Volt bis 253 Volt, mit einer Toleranz von bis zu ± 15 Prozent, und mit einer Frequenz von 40 Hertz bis 60 Hertz. Diese Versorgungsspannung kann lokale und temporäre Überspannungen aufweisen, beispielsweise ausgelöst durch einen Blitzschlag, der auf das Versorgungsnetz wirkt. Aufgrund der direkten Anbindung an den Schutzleiter ist sicherzustellen, dass häufig vorhandene geltende Normen und Vorschriften zur Vermeidung von gefährlichen Körperströmen, sowie des Brandschutzes angewendet werden. Dies kann in verschiedenen Applikationen z.B. Haushaltsgeräte vs. Industriemaschinen bzw. Industrieanlagen zu unterschiedlichen Ausgestaltungen und/oder Dimensionierungen der Schutzbeschaltung führen.

Die Primärseite des Schaltnetzteils umfasst zudem einen Gleichrichter. Dabei kann der Schutzleiterbezug der Sekundärseite (Kleinspannungsseite) in Verbindung mit der Koppelkapazität des Transformators zwischen Primär- und Sekundärseite einen Ausbreitungspfad für die Schwingung eines problematischen Schwingkreises ausbilden. Eine Überspannung des Versorgungsnetzes kann dazu führen, dass Spannungsspitzen auch auf der Sekundärseite auftreten, die vom Synchrongleichrichter als Arbeitssignal erfasst werden. Eine in Folge falsche aktive Gleichrichtung auf der Sekundärseite des Schaltnetzteils bei gleichzeitiger primärseitiger Bestromung des Transformators, auch als Hauptübertrager bezeichnet, durch den Controller (auch als Schaltregler bezeichnet) kann zu einer Zerstörung des Synchrongleichrichters und damit des Schaltnetzteils führen. Es wird ausdrücklich angemerkt, dass die Bezeichnung Schwingkreis als komplex zu betrachten ist und dieser aus mehreren parallelen Schwingkreisen bestehen kann. So wird hier lediglich ein vereinfachter Aufbau des Schaltnetzteils beschrieben, wobei Sicherungen, X-Kapazitäten, Reihenwiderstände zur Strombegrenzung etc. nicht einbezogen sind, die Schwingkreise unterstützen oder ausbilden können.

Eine Idee der Erfindung kann darin erkannt werden, dass eine Bedämpfung (einer Schwingung) der Zwischenkreisspannung, also der positiven oder negativen Hochspannungsseite des Gleichrichters auf Primärseite, mittels eines Widerstandselementes (resistiven Elements), nämlich eines Varistors, gegen den Schutzleiter (PE) eingebracht wird. Es erscheint dabei unerheblich, ob diese gegen die positive oder negative Hochspannungsseite eingebracht werden, da diese beiden Potentiale durch den ersten Kondensator und gegebenenfalls weitere parasitäre Kapazitäten bereits für die nieder- bzw. mittelfrequenten Störungen kurzgeschlossen sind. Das Widerstandselement kann die Überspannung in Wärme umwandeln und somit unschädlich machen. Nicht geeignet für die Einbindung der Überspannungsschutzschaltung gegen den Schutzleiter PE ist die Sekundärseite des Schaltnetzteils, also der positiven oder negativen Ausgangsspannung des Schaltnetzteils.

Bei dem Widerstandselement handelt es sich um einen Varistor. Ein Varistor bezeichnet hier ein spannungsabhängiges Widerstandselement, dessen ohmscher Widerstand von der abfallenden Spannung abhängig ist. Der ohmsche Widerstand des Varistors kann insbesondere mit steigender Spannung ansteigen. Die Auswahl des zu verwendenden Varistors ist dabei abhängig von der Applikation und den anzunehmenden bzw. vorgegebenen netzseitigen Überspannungen.

Gemäß einer Ausgestaltung kann in der Überspannungsschutzschaltung ein erster Widerstand oder eine Gasentladungsröhre in Reihe zu dem Widerstandselement geschaltet sein. Der Widerstand oder die Gasentladungsröhre kann die elektromagnetische Verträglichkeit verbessern und insbesondere bei Haushaltsgeräten vorteilhaft und/oder unerlässlich sein, um gesetzlichen Anforderungen zu genügen. Insbesondere die Verwendung einer Gasentladungsröhre kann eine verbesserte Entkopplung zwischen dem Zwischenspannungskreis und des Schutzleiters für hochfrequente Störungen bewirken.

Die Überspannungsschutzschaltung kann einen zweiten Kondensator umfassen, der in Reihe zu dem Widerstandselement geschaltet ist. Dabei kann der zweite Kondensator auch mit der Kapazität, die die positive Hochspannungsseite oder die negative Hochspannungsseite mit dem Schutzleiter (PE) elektrisch verbindet, zumindest teilweise identisch sein bzw. diese zumindest teilweise ausbilden. Bei einer zu geringen Spannung des Widerstandselements kann dies vorteilhaft sein. Bei industrieller Anwendung und einer ausreichend hohen Spannung des Widerstandselements kann auf den zweiten Kondensator verzichtet werden. In der Regel wird bei Haushaltsgeräten bzw. Geräten zum nicht-industriellen Einsatz ein zweiter Kondensator sinnvoll oder notwendig sein. Insbesondere kann der zweite Kondensator ein Y-Kondensator oder eine beliebige Kapazität mit ausreichender Spannungsfestigkeit sein.

Insbesondere kann die Überspannungsschutzschaltung einen Varistor als Widerstandselement zur Bedämpfung der Störspannung (Schwingung) und eine Y-Kapazität (zur sicheren Trennung der Schutzleitung) umfassen. Die Y-Kapazität und die Eigenschaften des Varistors bewirken, dass im Regelbetrieb kein relevanter Stromfluss auftritt. Ein Stromfluss in der Überspannungsschutzschaltung tritt nur im Falle einer Überspannung als abzuwendendem Fehlerfall auf.

Nach einem weiteren Aspekt der Erfindung wird auch ein Heizgerät vorgeschlagen, umfassend ein hier beschriebenes Schaltnetzteil. Das Schaltnetzteil kann dabei insbesondere zur Spannungsversorgung des Heizgeräts eingesetzt sein.

Das Heizgerät kann insbesondere einen Gasheizkessel umfassen. Dieser kann eine Fördereinrichtung, wie ein Gebläse, aufweisen, dazu eingerichtet, einen Volumenstrom Verbrennungsluft anzusaugen. Dem Volumenstrom Verbrennungsluft kann ein, einem vorgegebenen Verbrennungsluftverhältnis (auch als Lambda oder Luftzahl bezeichnet) entsprechender Volumenstrom (oder Massestrom) Brenngas zugesetzt werden und das entstehende Verbrennungsgemisch einem in einer Brennkammer angeordneten Brenner zugeführt und dort verbrannt werden. Das Heizgerät kann dabei einen pneumatischen oder elektronischen Gas-Luftverbund bilden. Insbesondere kann es sich bei dem Heizgerät um ein Brennwertheizgerät handeln, das dazu eingerichtet ist, die Abgase der Verbrennung auf eine Temperatur unterhalb der Kondensationstemperatur von Wasser zu kühlen und damit die Kondensationswärme des im Abgas enthaltenen Wasserdampfes zu nutzen.

Gemäß einer Ausgestaltung kann das Heizgerät auch eine Wärmepumpe umfassen, mit einem Kältekreis, in dem ein Kältemittel zirkuliert und mittels Phasenwechsels Wärme transportiert. Die Wärmepumpe entzieht hierzu einem Umgebungsmedium, beispielsweise Umgebungsluft, Erdwärme oder Grundwasser, Wärme und macht diese nutzbar, beispielsweise durch Übertragung auf einen Heizkreis eines Gebäudes oder zur Warmwasserversorgung desselben.

Dabei kann das Heizgerät auch ein Hybridheizgerät sein, das eine Wärmepumpe und einen Heizkessel, eingerichtet zur Verbrennung eines Brennstoffs, umfasst.

Gemäß einer Ausgestaltung kann mindestens ein Schwingkreis durch Teile benachbarter Peripheriegeräte des Heizgeräts gebildet werden, darunter zumindest eine Umwälzpumpe und/oder ein Gebläse.

Gemäß einer Ausgestaltung kann die Überspannungsschutzschaltung des Schaltnetzteils des Heizgeräts zudem einen in Reihe zu dem Widerstandselement angeordneten ersten Widerstand umfassen..

Gemäß einer Ausgestaltung kann die Überspannungsschutzschaltung des Schaltnetzteils zudem einen in Reihe zu dem Widerstandselement angeordneten zweiten Kondensator umfassen, der eine Kapazität in einem Bereich von bis zu 220 Nanofarad aufweist.

Gemäß einer Ausgestaltung kann es sich bei dem Schaltnetzteil um einen Sperrwandler mit galvanischer Trennung (auch als Flyback bezeichnet) handeln. Ein derartiges Schaltnetzteil ist für eine Anwendung bei einem Heizgerät besonders geeignet.

Die im Zusammenhang mit dem Schaltnetzteil erörterten Details, Merkmale und vorteilhaften Ausgestaltungen können entsprechend auch bei dem hier vorgestellten Heizgerät auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder einen Teil der Mehrzahl dieser Bauteile gleichermaßen gelten, dies ist aber nicht zwingend.

Hier werden somit ein Schaltnetzteil sowie ein Heizgerät angegeben, welche die mit Bezug auf den Stand der Technik geschilderten Probleme zumindest teilweise lösen. Insbesondere tragen das Schaltnetzteil und das Heizgerät zumindest dazu bei, einen sicheren Betrieb eines von dem Schaltnetzteil versorgten Geräts bzw. des Heizgeräts, auch bei lokal und/oder temporär auftretenden Überspannungen im Versorgungsnetz zu ermöglichen. Zudem kann die Erfindung mit geringem Aufwand und geringen Bauraumanforderungen umgesetzt werden.

Zudem kann ein hier vorgeschlagenes Schaltnetzteil auf einfache Weise an einem Gerät, beispielsweise einem Heizgerät, nachgerüstet werden, beispielsweise nach Ausfall des vorherigen Schaltnetzteils.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein hier vorgeschlagenes Schaltnetzteil,
- Fig. 2:: ein hier vorgeschlagenes Heizgerät,
- Fig. 3:: Parameterverläufe, die sich bei einem Schaltnetzteil nach dem Stand der Technik einstellen können, und
- Fig. 4:: die Parameterverläufe aus Fig. 3 mit einem hier vorgeschlagenen Schaltnetzteil.

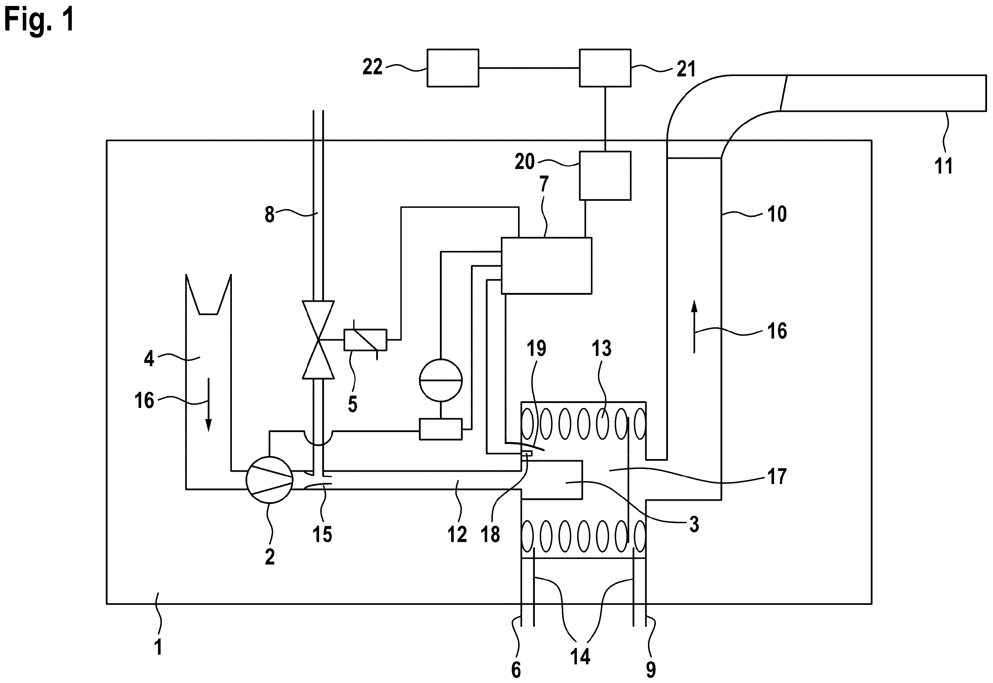

Fig. 1 zeigt beispielhaft und schematisch ein hier vorgeschlagenes Schaltnetzteil 20. Dieses ist mit einem Versorgungsnetz 22 verbunden, das beispielsweise eine Wechselspannung von 220 Volt mit einer Frequenz von 50 Hertz bereitstellt. Eine Überspannungsquelle 21 kann beispielsweise verursacht durch einen Blitzschlag eine temporäre Erhöhung einer Eingangsspannung 36 des Schaltnetzteils 20 bewirken. Die Eingangsspannung 36 umfasst eine Phase L, einen Nullleiter N und einen Schutzleiter PE. Die Eingangsspannung 36 wird zunächst einer Filterschaltung 37 zugeführt, die Drosselspulen, X-Kondensatoren und Y-Kondensatoren umfasst.

Das Schaltnetzteil 20 hat einen Transformator 27, der eine Primärseite 24 und eine Sekundärseite 25 des Schaltnetzteils 20 ausbildet. Dabei kann die Primärseite 24 auch als Hochspannungsseite und die Sekundärseite 25 auch als Kleinspannungsseite bezeichnet werden. Auf der Primärseite 24 ist ein Gleichrichter 29 angeordnet, der die Eingangsspannung 36 gleichrichtet. Zudem ist ein Controller 28, ausgeführt als MOSFET-Transistor, auf der Primärseite 24 angeordnet, der die vom Gleichrichter 29 erzeugte und am Transformator 27 anliegende Gleichspannung hochfrequent schaltet und somit zerhackt. Parallel zu dem Gleichrichter 29 ist ein erster Kondensator 26 zur Glättung geschaltet. Der Gleichrichter 29 bildet eine positive Hochspannungsseite 30 und eine negative Hochspannungsseite 31 aus. Eine Überspannungsschutzschaltung 23 verbindet die positive Hochspannungsseite 30 mit dem Schutzleiter PE. Die Überspannungsschutzschaltung 23 umfasst ein Widerstandselement 38, einen ersten Widerstand 39 sowie einen zweiten Kondensator 40.

Die Sekundärseite 25 umfasst einen Synchrongleichrichter 32, der mit dem Schalter 33, ausgeführt als MOSFET-Transistor, eine Gleichrichtung der Spannung der Sekundärseite 25 synchron zu dem Controller 28 durchführt und einen MOSFET-Transistor umfasst. Die resultierende Gleichspannung wird durch den dritten Kondensator 41 nochmals geglättet und steht als Ausgangsspannung 35 zur Verfügung. Die Sekundärseite 25 kann zudem mit Masse 34, also dem Nullleiter N, verbunden sein.

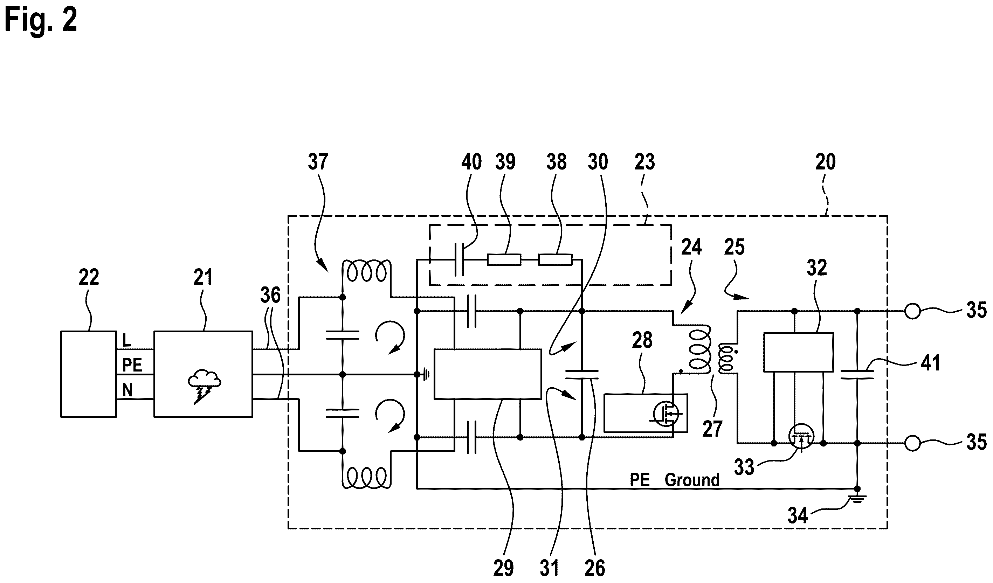

Fig. 2 zeigt beispielhaft und schematisch ein hier vorgeschlagenes Heizgerät 1. Dieses kann eine Luftzufuhr 4 für Verbrennungsluft aufweisen. In der Luftzufuhr 4 kann eine Venturi-Einrichtung 15 angeordnet sein. In einer Durchströmungsrichtung 16 des Heizgerätes 1 gesehen, kann stromaufwärts der Venturi-Einrichtung 15 eine als Gebläse ausgebildete Fördereinrichtung 2 angeordnet sein, die einen Massestrom Verbrennungsluft fördern kann. Ein Gasventil 5 kann im Bereich der Venturi-Einrichtung 15, insbesondere in der Venturi-Einrichtung 15, dem von der Fördereinrichtung 2 geförderten Massestrom Verbrennungsluft einen Massestrom Brenngas aus einer Gaszuführung 8 zusetzen. Das Gemisch aus Brenngas und Verbrennungsluft kann über einen Gemischkanal 12 einem Brenner 3 zugeführt, aus diesem in eine Brennkammer 17 austreten und dort verbrannt werden. Am Brenner 3 in der Brennkammer 17 ist zudem eine Zündeinrichtung 18 sowie ein Flammenwächter 19 angeordnet. In der Brennkammer 17 ist ein Wärmetauscher 13 angeordnet, der bei der Verbrennung entstehende Wärme auf einen Heizkreislauf 14 mit einem Vorlauf 6 und einem Rücklauf 9 übertragen kann.

Dem Brenner 3 nachgeordnet kann ein Abgasrohr 10 entstehende Verbrennungsprodukte einer Abgasanlage 11 zuführen. Ein Regel- und Steuergerät 7 des Heizgerätes 1 kann zumindest mit dem Gasventil 5, der Fördereinrichtung 2, der Zündeinrichtung 18 und dem Flammenwächter 19 elektrisch verbunden sein. Das Regel- und Steuergerät 7 kann dazu eingerichtet sein, ein hier vorgeschlagenes Verfahren durchzuführen. Hierzu kann auf einem Speicher des Regel- und Steuergeräts 7 ein Computerprogrammprodukt 20 hinterlegt sein, das das Regel- und Steuergerät 7 dazu veranlasst, die Schritte eines hier vorgeschlagenen Verfahrens auszuführen.

Das Schaltnetzteil 20 hat eine Ausgangsspannung 35, die das Heizgerät 1 als Versorgungsspannung nutzt. Hierzu ist ein Ausgang der Ausgangsspannung 35 des Schaltnetzteil 20 zumindest mit dem Regel- und Steuergerät 7 verbunden, das die Versorgungsspannung an Komponenten des Heizgeräts 1 weitergibt. Alternativ können Komponenten des Heizgeräts 1, wie die Fördereinrichtung 2 oder auch eine hier nicht gezeigte Umwälzpumpe direkt mit dem Schaltnetzteil 20 verbunden sein.

Es wird explizit darauf hingewiesen, dass das Ausführungsbeispiel des Heizgeräts 1 rein beispielhaft ist und es sich bei dem Heizgerät 1 auch um eine Wärmepumpe oder auch ein Hybridheizgerät handeln kann.

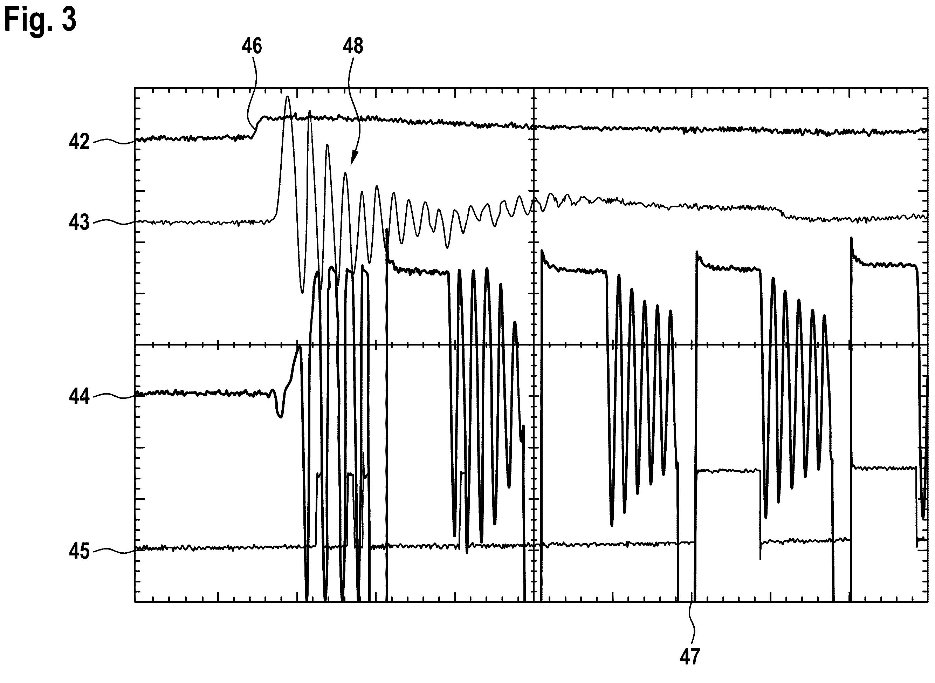

Fig. 3 zeigt beispielhaft Parameterverläufe, die sich bei Auftreten einer Überspannung 46 in Form eines Impulses der Eingangsspannung 36 einstellen können. Gezeigt sind ein erster Verlauf 42 der Eingangsspannung 36, ein zweiter Verlauf 43 der Spannung der positiven Hochspannungsseite 30 gegen den Schutzleiter PE und der negativen Hochspannungsseite 31, ein dritter Verlauf 44 der Spannung an der Sekundärseite 25 des Transformators 27 und ein vierter Verlauf 45 des Steuersignals des Synchrongleichrichters 32 zur Aktivierung des Schalters 33, eines MOSFET-Transistors. Der auftretende Impuls der Überspannung 46 kann eine Schwingung 48 des zweiten Verlaufs 43 der Spannung im Zwischenkreis bewirken, die wiederum eine Schwingung des dritten Verlaufs 44 der Spannung im Zwischenkreis auslöst. Diese kann vom Schalter 33 als Steuersignal fehlinterpretiert werden, wodurch dieser erkennbar im vierten Verlauf 45 des Steuersignals des Schalters 33 schaltet. Erst zu einem ersten Zeitpunkt 47, bei dem die Überspannung weitestgehend abgebaut wurde, normalisiert sich der vierte Verlauf 45 des Steuersignals des Synchrongleichrichters 32. Dabei kann die Fehlinterpretation als Steuersignal zu einer Zerstörung des Schalters 33 und damit des Schaltnetzteils 20 führen.

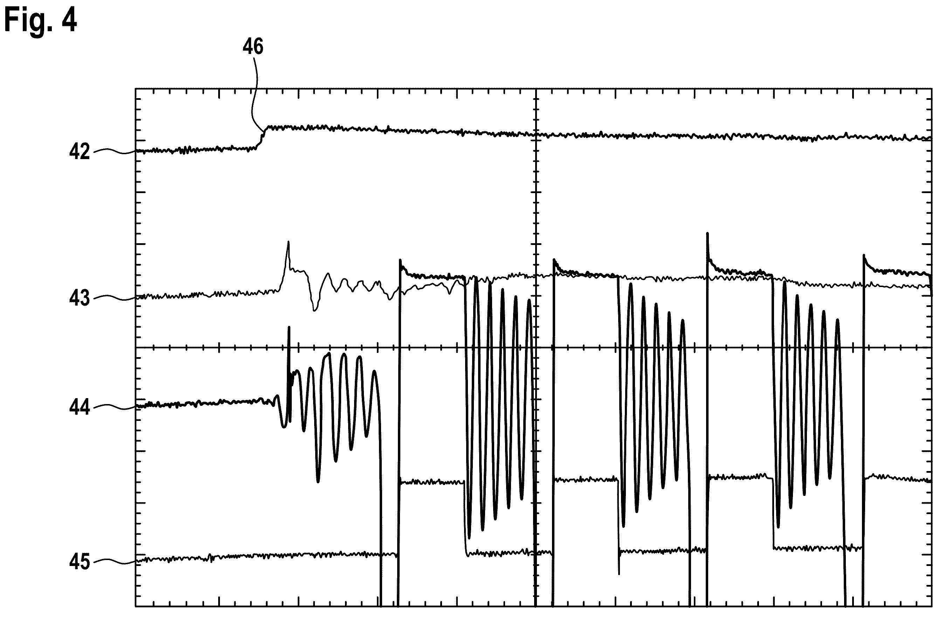

Fig. 4 zeigt die Parameterverläufe 42, 43, 44, 45 mit einem hier vorgeschlagenen Schaltnetzteil 20 umfassend eine Überspannungsschutzschaltung 23. Diese bewirkt eine umfassende Dämpfung der Schwingung 48 im Zwischenkreis, erkennbar im zweiten Verlauf 43. In Folge schwingt die Spannung an der Sekundärseite 25 des Transformators 27 nur unwesentlich und eine Fehlinterpretation als Steuersignal des Schalters 33 bleibt aus und der vierte Verlauf 45 desselben wird durch die Überspannung 46 nicht beeinflusst.

### Bezugszeichenliste

- 1: Heizgerät
- 2: Fördereinrichtung
- 3: Brenner
- 4: Luftzufuhr
- 5: Gasventil
- 6: Vorlauf
- 7: Regel- und Steuergerät
- 8: Gaszuführung
- 9: Rücklauf
- 10: Abgasrohr
- 11: Abgasanlage
- 12: Gemischkanal
- 13: Wärmetauscher
- 14: Heizkreislauf
- 15: Venturi-Einrichtung
- 16: Durchströmungsrichtung
- 17: Brennkammer
- 18: Zündeinrichtung
- 19: Flammenwächter
- 20: Schaltnetzteil
- 21: Überspannungsquelle
- 22: Versorgungsnetz
- 23: Überspannungsschutzschaltung
- 24: Primärseite
- 25: Sekundärseite
- 26: erster Kondensator
- 27: Transformator
- 28: Controller
- 29: Gleichrichter
- 30: positive Hochspannungsseite
- 31: negative Hochspannungsseite
- 32: Synchrongleichrichter
- 33: Schalter
- 34: Masse
- 35: Ausgangsspannung
- 36: Eingangsspannung
- 37: Filterschaltung
- 38: Widerstandselement
- 39: erster Widerstand
- 40: zweiter Kondensator
- 41: dritter Kondensator
- 42: erster Verlauf (Eingangsspannung)
- 43: zweiter Verlauf (Spannung Zwischenkreis)
- 44: dritter Verlauf (Spannung Sekundärseite Transformator)
- 45: vierter Verlauf (Steuersignal Synchrongleichrichter)
- 46: Überspannung
- 47: erster Zeitpunkt
- 48: Schwingung

## Patentansprüche

1. Schaltnetzteil (20) mit Schutzleiterbezug (PE), welches einen Transformator (27) hat, aufweisend eine Sekundärseite (25) mit einem Synchrongleichrichter (32) sowie eine Primärseite (24) mit einem Gleichrichter (29), der eine positive Hochspannungsseite (30) und eine negative Hochspannungsseite (31) ausbildet, wobei (i) zwischen der positiven Hochspannungsseite (30) und negativen Hochspannungsseite (31) ein erster Kondensator (26) angeordnet ist, und (ii) an der positiven Hochspannungsseite (30) und/oder negativen Hochspannungsseite (31) eine Überspannungsschutzschaltung (23) angeordnet ist, die ein Widerstandselement (38), ausgebildet als Varistor, umfasst, und (iii) die positive Hochspannungsseite (30) oder die negative Hochspannungsseite (31) über eine Kapazität oder einen zweiten Kondensator (40) mit dem Schutzleiter (PE) elektrisch verbindet.

2. Schaltnetzteil (20) nach Anspruch 1, wobei die Überspannungsschutzschaltung (23) zudem einen in Reihe zu dem Widerstandselement (38) angeordneten ersten Widerstand (39) oder eine in Reihe zu dem Widerstandselement (38) angeordnete Gasentladungsröhre umfasst.

3. Schaltnetzteil (20) nach einem der vorangehenden Ansprüche, wobei der zweite Kondensator (40) ein Y-Kondensator ist.

4. Heizgerät (1), umfassend ein Schaltnetzteil (20) nach einem der vorangehenden Ansprüche.

5. Heizgerät (1) nach Anspruch 4, wobei mindestens ein Schwingkreis durch Teile benachbarter Peripheriegeräte gebildet ist, wobei das Peripheriegerät zumindest eine Umwälzpumpe und/oder ein Gebläse umfasst.

6. Heizgerät (1) nach Anspruch 5, wobei eine Überspannungsschutzschaltung (23) des Schaltnetzteils (20) einen in Reihe zu dem Widerstandselement (38) angeordneten ersten Widerstand (39) umfasst.

7. Heizgerät (1) nach einem der Ansprüche 4 bis 6, wobei die Überspannungsschutzschaltung (23) des Schaltnetzteils (20) einen in Reihe zu dem Widerstandselement (38) angeordneten zweiten Kondensator (40) umfasst, der eine Kapazität in einem Bereich von bis zu 220 Nanofarad aufweist.

8. Heizgerät (1) nach einem der Ansprüche 4 bis 7, wobei das Heizgerät (1) einen Brennwert-Gasheizkessel umfasst.
